# EUROPEAN PATENT SPECIFICATION

(11) **EP 3 039 878 B1**
(45) Date of publication and mention of the grant of the patent: **31.10.2018**
(21) Application number: 14848917.2
(22) Date of filing: 23.09.2014
(51) Int. Cl.: H04N 21/43, H04N 21/4722, H04N 21/2187, H04L 29/06

(54) **IMAGE DISPLAY APPARATUS, SERVER, METHOD FOR OPERATING THE IMAGE DISPLAY APPARATUS, AND METHOD FOR OPERATING THE SERVER**
BILDANZEIGEVORRICHTUNG, SERVER, VERFAHREN ZUM BETRIEB DER BILDANZEIGEVORRICHTUNG UND VERFAHREN ZUM BETRIEB DES SERVERS
APPAREIL D'AFFICHAGE D'IMAGE, SERVEUR, PROCÉDÉ DE MISE EN OEUVRE L'APPAREIL D'AFFICHAGE D'IMAGE ET PROCÉDÉ DE MISE EN OEUVRE DU SERVEUR

(30) Priority: 24.09.2013 KR 20130113478
(43) Date of publication of application: 06.07.2016
(73) Proprietor: Samsung Electronics Co., Ltd., Gyeonggi-do 16677 (KR)
(72) Inventor: CHOI, Hyung-tak, Suwon-si Gyeonggi-do 443-756 (KR); EOM, Myung-jin, Seoul 157-753 (KR); KWON, O-hoon, Suwon-si Gyeonggi-do 443-811 (KR); DONG, Jong-sung, Suwon-si Gyeonggi-do 445-983 (KR)
(74) Representative: Appleyard Lees IP LLP
(86) International application number: PCT/KR2014/008822
(87) International publication number: WO 2015/046854

(56) References cited:
- EP-A1- 2 579 605
- WO-A1-2013/080407
- KR-A- 20110 125 587
- US-A1- 2011 072 354
- US-A1- 2012 059 884
- US-A1- 2012 082 427
- US-A1- 2012 082 427
- MARIO MONTAGUD ET AL: "Enhanced adaptive RTCP-based Inter-Destination Multimedia Synchronization approach for distributed applications", COMPUTER NETWORKS, ELSEVIER, AMSTERDAM, NL, vol. 56, no. 12, 10 May 2012 (2012-05-10), pages 2912-2933, XP028400811, ISSN: 1389-1286, DOI: 10.1016/J.COMNET.2012.05.003 [retrieved on 2012-05-18]
- BORONAT F ET AL: "Multimedia group and inter-stream synchronization techniques: A comparative study", INFORMATION SYSTEMS, PERGAMON PRESS, OXFORD, GB, vol. 34, no. 1, 1 March 2009 (2009-03-01), pages 108-131, XP025644936, ISSN: 0306-4379, DOI: 10.1016/J.IS.2008.05.001 [retrieved on 2008-05-24]

## Description

### Technical Field

One or more exemplary embodiments relate to an image display apparatus, a server, and methods for operating the image display apparatus and the server, and more particularly, to an image display apparatus which displays image contents by synchronizing the image contents among image display apparatuses interworking with an image contents-based social network service (SNS), or displays image contents and SNS data by synchronizing the image contents and the SNS data, and a method of operating the image display apparatus.

### Background Art

Image display apparatuses are equipped with a function for displaying an image to enable users to view the image. A user may view broadcasted content through an image display apparatus. The image display apparatus displays a program selected by the user among broadcasting signals transmitted by a broadcasting station. Currently, broadcasting systems are globally being transformed from analog broadcasting to digital broadcasting.

Digital broadcasting uses digital images and sound signals. Compared to analog broadcasting, digital broadcasting has less data loss due to its strength to external noise, is advantageous for error correction, exhibits a high resolution, and provides a clear screen image. Also, digital broadcasting is able to provide bidirectional services, unlike analog broadcasting.

Recently, in addition to the digital broadcasting function, smart TVs capable of providing various contents are being introduced. The smart TV is not passively operated in response to user input, but aims to automatically provide services to a user based on what the user wants, without the user's operation.

Articles "Enhanced adaptive RTCP-based inter-destination Multimedia Synchronization approach for distribution applications" (Montagud et al, published in Computer Networks, Vol. 56, No. 12) and "Multimedia group and inter-stream synchronization techniques: A comparative study." (Boronat et al, published in Information Systems, Vol. 34, No. 1) and US 2012/0829427 A1 show examples of the related art.

### Technical Problem

The image contents received by different transmission methods have a difference between timing of reproduced images of the image contents.

### Solution to problem

One or more exemplary embodiments include an image display apparatus which may synchronize displaying of image contents on a plurality of image display apparatuses interworking with an image contents-based social network service, a server, and methods of operating the image display apparatus and the server.

### Advantageous Effects of Invention

Since the reproduced images of image contents received by different transmission methods are synchronized with each other, inconvenience due to a difference between timing of images reproduced by a plurality of image display apparatuses may be prevented. Also, since timing of a reproduced image of the image contents and SNS data according thereto are synchronized with each other, user convenience may be improved.

### Brief Description of Drawings

These and/or other aspects will become apparent and more readily appreciated from the following description of the exemplary embodiments, taken in conjunction with the accompanying drawings in which:
FIG. 1 illustrates a contents-based social network service (SNS) system according to an exemplary embodiment;
FIG. 2 is a block diagram illustrating a configuration of an image display apparatus according to an exemplary embodiment;
FIG. 3 is a block diagram illustrating a configuration of an image display apparatus according to another exemplary embodiment;
FIG. 4 is a block diagram illustrating a configuration of a first server according to an exemplary embodiment;
FIG. 5 illustrates a method of synchronizing contents in a contents-based SNS system according to an exemplary embodiment;
FIG. 6 is a flowchart illustrating a method of operating an image display device according to an exemplary embodiment;
FIG. 7 is a flowchart illustrating a method of operating a server according to an exemplary embodiment;
FIGS. 8, 9, 10A, 10B, 11A, and 11B are reference drawings for a method of operating an image display apparatus according to an exemplary embodiment;
FIG. 12 illustrates a method of synchronizing contents in a contents-based SNS system according to another exemplary embodiment;
FIG. 13 is a flowchart illustrating a method of synchronizing contents in a contents-based SNS system according to another exemplary embodiment;
FIG. 14 is a flowchart illustrating a method of operating a server according to another exemplary embodiment; and
FIG. 15 is a reference drawing for a synchronization method according to an exemplary embodiment.

### Best Mode for Carrying out the Invention

One or more exemplary embodiments include an image display apparatus which may synchronize displaying of image contents on a plurality of image display apparatuses interworking with an image contents-based social network service, a server, and methods of operating the image display apparatus and the server.

One or more exemplary embodiments include an image display apparatus which may synchronize displaying of image contents and social network service data, a server, and methods of operating the image display apparatus and the server.

Additional aspects will be set forth in part in the description which follows and, in part, will be apparent from the description, or may be learned by practice of the exemplary embodiments.

According to one or more exemplary embodiments, a method of operating an image display apparatus includes receiving image contents, performing a social network service (SNS) according to the image contents, receiving a reference time set according to information corresponding to an image contents reproduction time of a plurality of image display apparatuses interworking with the SNS, and displaying the image contents according to the reference time.

The reference time may be set to be an image contents reproduction time of one from among the plurality of image display apparatuses interworking with the SNS which has the latest image contents reproduction time among the plurality of image display apparatuses.

The image contents may include broadcasting contents and streaming contents that are a retransmission of the broadcasting contents.

In the displaying of the image contents, the image contents may be displayed by synchronizing the image contents reproduction time with the reference time.

In the displaying of the image contents, the image contents may be displayed at the same time in each of the plurality of image display apparatuses interworking with the SNS.

The performing of the SNS function may include forming a social group with at least one other image display apparatus.

According to one or more exemplary embodiments, an image display apparatus includes a controller configured to control an operation of a social network service (SNS) according to received image contents, and a network interface unit configured to receive a reference time set according to information corresponding to an image contents reproduction time of a plurality of image display apparatuses interworking with the SNS, in which the controller is configured to control a displaying of the image contents according to the reference time.

The reference time may be set to be an image contents reproduction time of one from among the plurality of image display apparatuses interworking with the SNS which has the latest image contents reproduction time among the plurality of image display apparatuses.

The image contents may include broadcasting contents and streaming contents that are a retransmission of the broadcasting contents.

The controller may be configured to control the displaying of the received image contents by synchronizing the image contents reproduction time with the reference time.

The controller may be configured to control the displaying of the received image contents at the same time in each of the plurality of image display apparatuses interworking with the SNS.

The image display apparatus may also include a display unit configured to display the received image contents.

According to one or more exemplary embodiments, a method of operating an image display apparatus includes receiving and displaying image contents, performing a social network service (SNS) according to the image contents, requesting SNS data related to the image contents, receiving the SNS data and a creation time of the SNS data which is determined based on an image contents reproduction time, and outputting the SNS data according to the creation time of the SNS data.

The method may further include transmitting information corresponding to the image contents reproduction time.

The method may further include retransmitting information corresponding to the image contents reproduction time when buffering occurs in the displaying of the image contents.

The SNS data may include at least one from among image data, voice data, and text data received from a plurality of image display apparatuses interworking with the SNS, in relation with the image contents.

In the outputting of the SNS data, the image contents reproduction time may correspond to the creation time of the SNS data.

The image contents may include broadcasting contents and streaming contents that are a retransmission of the broadcasting contents.

The method may further include, when image contents are the streaming contents and buffering occurs in a displaying of the streaming contents, calculating a buffering time and allowing the SNS data to be output by being delayed for the buffering time.

According to one or more exemplary embodiments, an image display apparatus includes a controller configured to perform a social network service (SNS) according to received image contents and requesting SNS data related to the image contents, and a network interface unit configured to receive the SNS data and a creation time of the SNS data which is determined according to an image contents reproduction time, in which the controller outputs the SNS data according to the creation time of the SNS data.

The network interface unit may be further configured to transmit information corresponding to the image contents reproduction time.

The SNS data may include at least one from among image data, voice data, and text data received from a plurality of image display apparatuses interworking with the SNS, corresponding to the image contents.

When the image contents reproduction time corresponds to the creation time of the SNS data, the controller may output the SNS data.

The image contents may include broadcasting contents and streaming contents that are a retransmission of the broadcasting contents.

When the image contents are the streaming contents and buffering occurs in a displaying of the streaming contents, the controller may be configured to calculate a buffering time and allow the SNS data to be output by being delayed for the buffering time.

The image display apparatus may further include a display unit configured to display the received image contents.

According to one or more exemplary embodiments, a method of operating a server includes receiving information corresponding to an image contents reproduction time of one of a plurality of image display apparatuses interworking with a social network service (SNS) according to image contents and SNS data related to the image contents, determining a creation time of the SNS data based on the image contents reproduction time, receiving a request for the SNS data from at least one of the plurality of image display apparatuses, and transmitting the SNS data to at least one of the plurality of image display apparatuses to be displayed by being synchronized with the image contents, according to a determined creation time of the SNS data.

In the determining of the creation time of the SNS data, the creation time of the SNS data may be determined to be equal to the image contents reproduction time when the SNS data is created.

In the transmitting of the SNS data, the creation time of the SNS data may be transmitted with the SNS data.

In the transmitting of the SNS data, the SNS data may be transmitted according to the creation time of the SNS data.

### Mode for the Invention

Reference will now be made in detail to exemplary embodiments, examples of which are illustrated in the accompanying drawings, wherein like reference numerals refer to like elements throughout. In this regard, the exemplary embodiments may have different forms and should not be construed as being limited to the descriptions set forth herein. Accordingly, the exemplary embodiments are merely described below, by referring to the figures, to explain aspects of the exemplary embodiments.

Hereinafter, the term "unit" or "module" refer to a software component, or a hardware component such as FPGA or ASIC, and performs a certain function. However, the "unit" or "module are not limited to software or hardware. The "unit" or "module" may be configured in an addressable storage medium and may be configured to be executed by one or more processors. Hence, the "unit" or "module" include elements such as software elements, object-oriented software elements, class elements, and task elements, and processes, functions, attributes, procedures, subroutines, segments of program codes, drivers, firmware, micro-codes, circuits, data, databases, data structures, tables, arrays, and variables. The functions provided in the elements, the units, and the modules may be combined into a fewer number of elements, units, and modules, or may be divided into a larger number of elements, units, and modules.

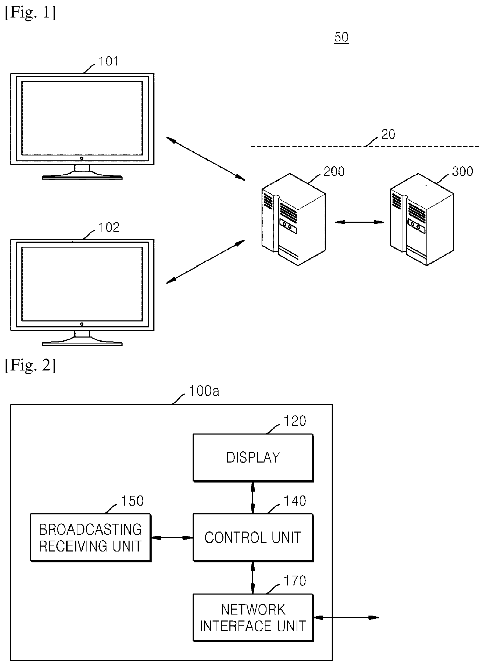

FIG. 1 illustrates a contents-based social network service (SNS) system 50 according to an exemplary embodiment. Referring to FIG. 1, the contents-based SNS system 50 according to an exemplary embodiment may include a plurality of image display apparatuses 101 and 102 and a server system 20.

An image display device may include a first image display apparatus 101 and a second image display apparatus 102. The image display device according to the exemplary embodiment may be a fixed or mobile digital broadcasting receiver (capable of receiving digitally broadcasted content). The image display device may include a TV set, a monitor, a mobile phone, a smart phone, a notebook computer, a tablet PC, a digital broadcasting terminal, a personal digital assistant (PDA), a portable multimedia player (PMP), etc.

The server system 20 may include a first server 200 and a second server 300. The first server 200 may provide a service for connection between the first image display apparatus 101 and the second image display apparatus 102. Also, the first server 200 may provide a service for connection between the image display apparatus 100 and the second server 300.

Also, according to an exemplary embodiment, the first server 200 may be a contents synchronization server. For example, the first server 200 may transmit reference time information to the first and second image display apparatuses 101 and 102.

The first and second image display apparatuses 101 and 102 may display image contents according to a received reference time. Accordingly, the first and second image display apparatuses 101 and 102 may display image contents by synchronizing the image contents, which will be described in detail later.

The second server 300 may be an SNS server that provides a contents-based SNS to the image display apparatus 100.

In the present embodiment, the image display apparatus 100 may receive a contents-based SNS from the second server 300. A user of the image display apparatus 100 may have obtained an SNS account by subscribing to the (contents-based) SNS. For example, when the second server 300 provides an SNS based on image contents and users of the first and second image display apparatuses 101 and 102 are subscription members of the SNS provided by the second server 300, the second server 300 may provide a service for allowing the users of the first and second image display apparatuses 101 and 102 to view the same image contents and simultaneously transmit or receive image data, voice data, and text data.

FIG. 2 is a block diagram illustrating a configuration of an image display apparatus 100a according to an exemplary embodiment. Referring to FIG. 2, the image display apparatus 100a according to the exemplary embodiment may include a broadcasting receiving unit (i.e., broadcasting receiver) 150, a control unit (i.e., controller) 140, a display 120, and a network interface unit 170.

The broadcasting receiving unit 150 may receive broadcasting contents and streaming contents that are a retransmission of the broadcasting contents.

The broadcasting contents may be received from a broadcasting station (not shown) and the streaming contents may be received from a streaming server (not shown). The streaming server may be made up of various servers that provide live broadcasting, recorded broadcasting contents, or various moving picture contents in streaming.

The control unit 140 may process an image signal and input a processed image signal to the display 120. Accordingly, an image corresponding to the image signal may be displayed on the display 120. Also, the control unit 140 may control the image display apparatus 100a according to a user command input through a user input unit or an internal program.

According to an exemplary embodiment, the control unit 140 may perform an SNS related to the received image contents.

Also, the control unit 140 may receive a contents reference time from a contents synchronization server 200. The reference time may be set based on information about image contents reproduction time of image display apparatuses interworking with an SNS.

Accordingly, the control unit 140 may control the received image contents to be output according to the received reference time. Also, the control unit 140 may include a memory (not shown) and may store the received image contents in the memory.

For example, the control unit 140 may receive image contents at a first time, temporarily store the received image contents in the memory when the reference time corresponding to the image contents is a second time that is later than the first time, and control the image contents to be displayed on the display 120 when the second time is reached.

The control unit 140 may request SNS data related to the image contents from the server system 20. The SNS data may include image data, voice data, and text data which are related to the image contents and received from the image display apparatuses interworking with the SNS.

Accordingly, the control unit 140 may receive SNS data and a creation time of the SNS data which is determined based on a reproduction time of the image contents. Also, the control unit 140 may output data according to the creation time of the received data. Alternatively, the control unit 140 may output data received from the first server 200 according to the creation time. The display 120 generates a drive signal by converting an image signal, a data signal, an on-screen display (OSD) signal, a control signal, etc., which are processed by the control unit 140.

The display 120 may be embodied as a plasma display panel (PDP), a liquid crystal display (LCD), an organic light-emitting display (OLED), a flexible display, etc., or as a three-dimensional display. Also, the display 120 may be embodied as a touch screen so as to be used as an input device in addition to an output device.

According to an exemplary embodiment, the display 120 may display the received image contents. The image contents may have a reproduction time that is synchronized with the reference time received from the first server 200. Accordingly, the image display apparatuses interworking with the SNS may all display the same frame of the same image contents at the same time.

According to an exemplary embodiment, the display 120 may display image data or text data according to the creation time of data determined based on the reproduction time of the image contents. Accordingly, the display 120 may display the received data in synchronization with the image contents reproduction time.

The network interface unit 170 provides an interface for connection with a wire/ wireless network including the Internet network. For example, the network interface unit 170 may receive contents or data provided by the Internet or a content provider or a network operator, via a network.

According to an exemplary embodiment, the network interface unit 170 may provide an interface for connecting the image display apparatus 100a to the first and second servers 200 and 300.

Also, the image display apparatus 100a may transmit image contents reproduction time information to the first server 200 and social network service data to the first server 200 or the second server 300, via the network interface unit 170.

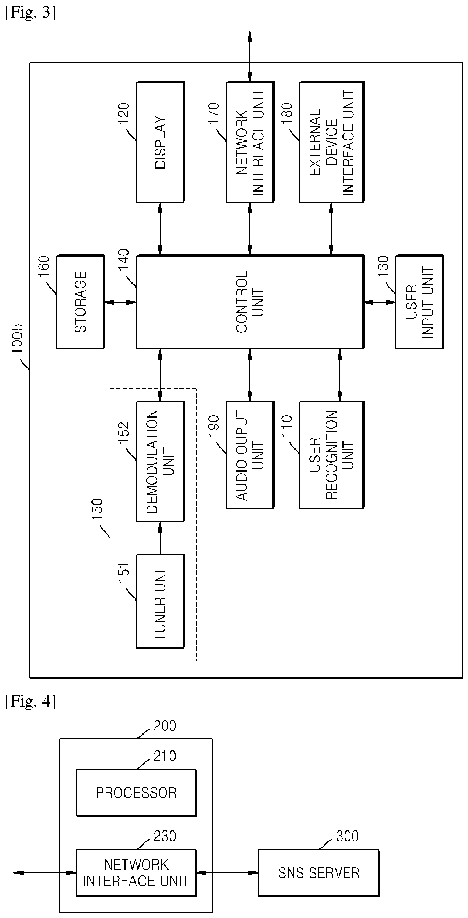

FIG. 3 is a block diagram illustrating a configuration of an image display apparatus 100b according to another exemplary embodiment. Referring to FIG. 3, the image display apparatus 100b according to another exemplary embodiment may include the control unit 140, the display 120, a user recognition unit 110, a user input unit (i.e., user inputter) 130, the broadcasting receiving unit 150, an external device interface unit 180, a storage 160, a sensor (not shown), and an audio output unit (i.e., audio outputter) 190.

Since the broadcasting receiving unit 150, the control unit 140, the display 120, and the network interface unit 170 of FIG. 2 correspond to the broadcasting receiving unit 150, the control unit 140, the display unit 120, and the network interface unit 170 of FIG. 3, descriptions of these elements will be omitted herein.

The broadcasting receiving unit 150 may include a tuner 151, a demodulation unit (i.e., demodulator) 152, and a network interface unit. As necessary, the broadcasting receiving unit 150 may be designed to include only the tuner 151 and the demodulation unit 152, without the network interface unit 170, or include only the network interface unit 170, without the tuner 151 and the demodulation unit 152.

The tuner 151 may select radio frequency (RF) broadcasting signals corresponding to channels selected by a user or all previously stored channels, from among RF broadcasting signals received through an antenna (not shown). Also, the tuner 151 may convert a selected RF broadcasting signal into an intermediate frequency (IF) signal or a base band image or voice signal.

For example, when the selected RF broadcasting signal is a digital broadcasting signal, the tuner 151 converts the selected RF broadcasting signal into a digital IF signal. When the selected RF broadcasting signal is an analog broadcasting signal, the tuner 151 converts the selected RF broadcasting signal into an analog base band image or voice signal, for example, a composite video banking sync (CVBS)/signal information field (SIF). In other words, the tuner 151 may process a digital broadcasting signal or an analog broadcasting signal. The analog base band image or voice signal output from the tuner 151 may be directly input to the control unit 140.

Also, the tuner 151 may receive an RF broadcasting signal of a single carrier according to an advanced television system committee (ATSC) type or an RF broadcasting signal of a multicarrier according to a digital video broadcasting (DVB) type.

According to an exemplary embodiment, the tuner 151 may sequentially select, from among the RF broadcasting signals received through the antenna, RF broadcasting signals of all broadcasting channels that are stored through a channel memory function. The tuner 151 may convert a selected RF broadcasting signal into an IF signal or a base band image or voice signal.

The tuner 151 may include a plurality of tuners in order to receive broadcasting signals for a plurality of channels. Alternatively, the tuner 151 may be a single tuner that simultaneously receives broadcasting signals for the plurality of channels.

The demodulation unit 152 may receive a digital IF (DIF) signal converted by the tuner 151 and perform a demodulation operation on the DIF signal. The demodulation unit 152 may output a stream signal TS after performing demodulation and channel decoding. The stream signal may be a signal obtained by multiplexing one from among an image signal, a voice signal, or a data signal.

The stream signal output from the demodulation unit 152 may be input to the control unit 140. The control unit 140 may perform inverse multiplexing, image/voice signal processing, etc. and output an image to the display 120 and voice to the audio output unit 190.

The external device interface unit 180 may transmit a signal to or receive a signal from an external device connected thereto. Accordingly, the external device interface unit 180 may include a wireless communication unit (not shown) and an audio/video (A/V) input/output unit (not shown).

The external device interface unit 180 may be connected to an external device such as a digital versatile disk (DVD) player, a Bluray player, a game device, a camera, a camcorder, a computer (laptop computer), a set-top box, etc., in a wired/wireless method, and may perform an input/output operation with respect to the external device.

The A/V input/output unit may receive an input of an image and/or a voice signal of the external device. The wireless communication unit may perform near field communication (NFC) function with another electronic device.

The user input unit 130 may transfer a control command input by a user to the control unit 140 or a signal from the control unit 140 to the user.

The network interface unit 170 may provide an interface for connecting the image display apparatus 100b to a wired/wireless network, including the Internet network. For example, the network interface unit 170 may receive contents or data provided by the Internet or a content provider or a network operator, via a network.

The storage 160 may store a program for processing and controlling each signal in the control unit 140 and store a processed image, voice, or data signal. Also, the storage 160 may perform a function of temporarily storing an input image, voice, or data signal. Also, the storage 160 may store information about a predetermined broadcasting channel through a channel memory function, such as a channel map.

Although FIG. 3 illustrates that the storage 160 is provided separately from the control unit 140, the exemplary embodiment is not limited thereto. The storage 160 may be included in the control unit 140.

The control unit 140 may inversely multiplex a stream of a signal input through the tuner 151, the demodulation unit 152, or the external device interface unit 180, or process inversely multiplexed signals, thereby generating and outputting a signal for outputting an image or a voice.

An image signal that is image-processed in the control unit 140 may be input to the display 120 to be displayed as an image corresponding to the image signal. Also, the image signal that is image-processed in the control unit 140 may be input to an external output device through the external device interface unit 180.

The voice signal processed by the control unit 140 may be output as sound to the audio output unit 190. Also, the voice signal processed by the control unit 140 may be input to the external output device through the external device interface unit 180.

Although it is not illustrated in FIG. 3, the control unit 140 may include an inverse multiplexing unit, an image processing unit, etc.

In addition, the control unit 140 may control an overall operation of the image display apparatus 100b. For example, the control unit 140 may control the tuner 151 to tune RF broadcasting to correspond to a channel selected by a user or a previously stored channel.

Also, the control unit 140 may control the image display apparatus 100b according to a user command input through the user input unit 130 or an internal program.

The control unit 140 may control the display 120 to display an image. The image displayed on the display 120 may be a still image or a moving picture, or a three-dimensional image.

The display 120 may generate a drive signal by converting one from among an image signal, a data signal, an OSD signal, a control signal processed by the control unit 140, or one from among an image signal, a data signal, or a control signal received by the external device interface unit 180.

The display 120 may be a PDP, an LCD, an OLED, a flexible display, etc., or may be a three-dimensional display. Also, the display 120 may be embodied as a touch screen so as to be used as an input device in addition to an output device.

The audio output unit 190 may receive an input of a signal that is voice-processed by the control unit 140 and output the signal as an audio signal.

The user recognition unit 110 may include a camera (not shown). The user recognition unit 110 may capture an image of a user by using the camera and recognize the user based on the captured image.

The user recognition unit 110 may be embodied by a single camera, but the present invention is not limited thereto, and the user recognition unit 110 may be embodied by a plurality of cameras. The camera may be embedded in the image display apparatus 100b to be arranged above the display unit 120 or separately from the display unit 120. Information about an image captured by the camera may be input to the control unit 140.

The control unit 140 may recognize a user's gesture based on each of an image captured by the camera and a signal sensed by a sensing unit (not shown), or a combination thereto.

The image display apparatus 100b, unlike the illustration of FIG. 3, may receive image contents through the network interface unit 170 or the external device interface unit 180, without including the tuner unit 151 and the demodulation unit 152 illustrated in FIG. 3, and reproduce the image contents.

The block diagrams of the image display apparatuses 100a and 100b illustrated in FIGS. 2 and 3 are block diagrams for an embodiment of the present invention. Each of constituent elements of the block diagrams may be incorporated, added, or omitted according to the specifications of the image display apparatuses 100a and 100b that are actually embodied. In other words, two or more constituent elements may be incorporated into one constituent element or one or more constituent elements may be divided into two or more constituent elements. Also, the function performed by each block is to explain the present embodiment and a detailed operation or unit does not restrict the right scope of the present invention.

The image display apparatuses 100a and 100b are examples of an image signal processing apparatus for performing signal processing of an image stored in an apparatus or an input image. Another example of the image signal processing apparatus may be a set-top box, a DVD player, a Bluray player, a game device, a computer, etc., from which the display unit 120 and the audio output unit 190 illustrated in FIG. 3 are excluded.

FIG. 4 is a block diagram illustrating a configuration of the first server 200 according to an embodiment of the present invention. Referring to FIG. 4, the first server 200 may include a processor 210 and a network interface unit 230.

The network interface unit 230 provides an interface for connecting the first server 200 to a wired/wireless network including the Internet network.

In the present embodiment, the network interface unit 230 may provide an interface for connecting with a plurality of image display apparatuses interworking with the SNS server 300. Accordingly, the network interface unit 230 may receive data from the image display apparatuses interworking with the SNS server 300 or the social network, via a network.

For example, the network interface unit 230 may receive information about image contents reproduction time from the image display apparatuses interworking with the social network.

Also, the network interface unit 230 may receive data related to the image contents from the image display apparatuses or the SNS server 300 interworking with the social network.

The processor 210 may set the reference time by using the information about the image contents reproduction time received from the image display apparatuses interworking with the social network. The latest one of the image contents reproduction times received from the image display apparatuses may be set to be the reference time. Alternatively, a reproduction time of image contents received from the broadcasting station may be set to be the reference time.

The reference time set by the processor 210 may be transmitted to the image display apparatuses interworking with the social network. The processor 210 may determine a creation time of data based on the reproduction time of the image contents. The data and the data creation time may be transmitted to the image display apparatuses interworking with the social network.

The processor 210 may transmit data to at least one of the image display apparatuses according to the data creation time so that the data may be displayed in synchronism with the image contents. On the other hand, although FIG. 4 illustrates that the first server 200 and the SNS server 300 are configured to be different servers, the first server 200 and the SNS server 300 may be configured in one server.

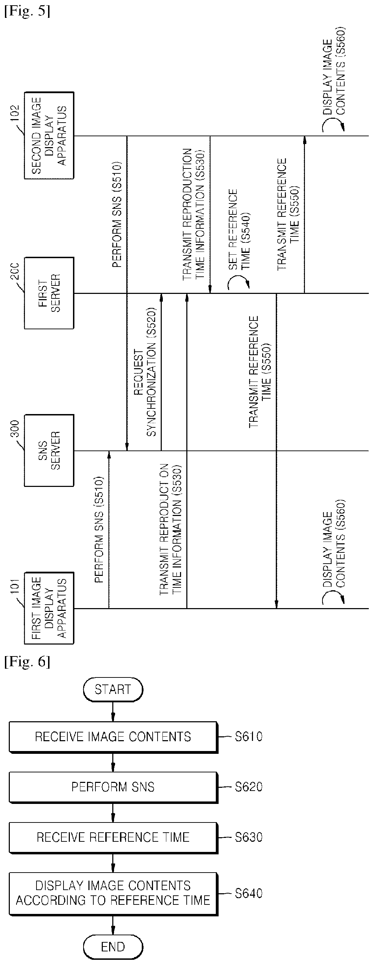

FIG. 5 illustrates a method of synchronizing contents in a contents-based SNS system according to an embodiment of the present invention, in which the contents-based SNS system is configured to include the image display apparatuses 101 and 102, the first server 200, and the SNS server 300 interworking with the SNS.

The first and second image display apparatuses 101 and 102 may receive image contents from the broadcasting station or the streaming server. The image contents may be received in the form of an image signal.

The first and second image display apparatuses 101 and 102 may perform an SNS function based on the received image contents (S510). The first and second image display apparatuses 101 and 102 may transmit user identification information to the SNS server 300 so as to log in to the SNS server 300.

The user identification information may include at least one of a user identifier for identifying a user, a session identifier for identifying a session with an SNS server of a current user, and a session identifier secrete of a current user.

The first and second image display apparatuses 101 and 102 logged in to the SNS server 300 may interwork with the social network.

The SNS server 300 may request synchronization of image contents of the first and second image display apparatuses 101 and 102 from the first server (S520).

The first and second image display apparatuses 101 and 102 may transmit information about a reproduction time of image contents to the first server 200 (S530).

The first server 200 may set the reference time based on the reproduction time information received from the first and second image display apparatuses 101 and 102 (S540).

The image contents reproduction time information may be information about when the first and second image display apparatuses 101 and 102 begin reproduction of the image contents. Alternatively, the image contents reproduction time information may be information about when the image contents are received or when each frame constituting the image contents is displayed on the display unit 120.

The reference time may be set to any one of a first reproduction time received from the first image display apparatus 101 and a second reproduction time received from the second image display apparatus 102.

For example, the first server 200 may set one of the first and second reproduction times, whichever is later, as the reference time. When the first image display apparatus 101 receives image contents from the broadcasting station, the first server 200 may set the first reproduction time received from the first image display apparatus 101 as the reference time. However, the present invention is not limited thereto and the reference time may be set according to a variety of standards.

Also, the first server 200 may transmit the reference time to the first and second image display apparatuses 101 and 102 (S550). The first and second image display apparatuses 101 and 102 may display the image contents according to the received reference time (S560).

For example, when the reference time is later than the current image contents reproduction time, the received image contents may be displayed by being delayed for a time period corresponding to a difference between the current image contents reproduction time and the reference time. The received image contents may be temporarily stored in the memory, instead of being directly output, and may be displayed according to the reference time.

FIG. 6 is a flowchart for showing a method of operating the image display device according to an embodiment of the present invention. Referring to FIG. 6, the image display apparatus 100 may receive image contents (S610). The image display apparatus 100 may receive image contents from the broadcasting station or the streaming server (S610).

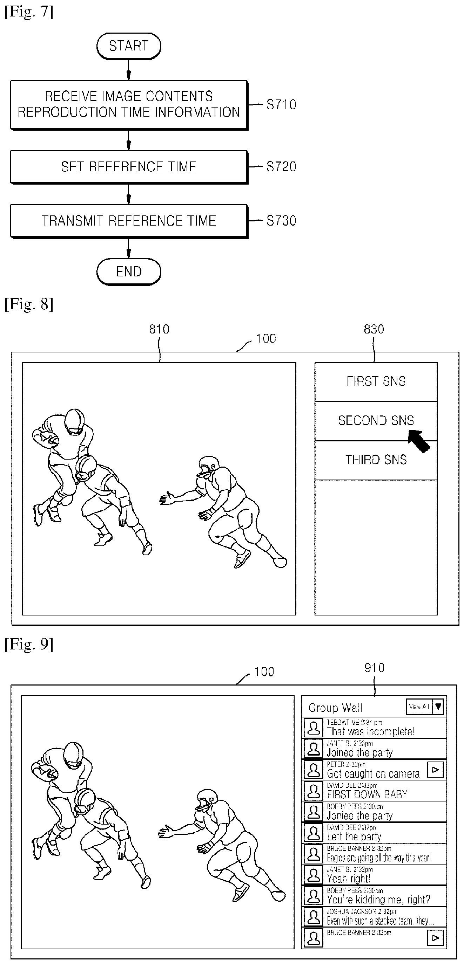

As illustrated in FIG. 8, received image contents 810 may be displayed on the image display apparatus 100, and an SNS menu 830 based on the displayed image contents may be displayed together with the displayed image.

When a user input to select any one of a plurality of SNS's included in the SNS menu 830 is received, the image display apparatus 100 may perform a selected SNS function (S620). When receiving a user input to perform an SNS function, the image display apparatus 100 may transmit user information and image contents information to the SNS server 300.

The user information may include authentication information to log on the SNS server 300. Although it is not illustrated, the image display apparatus 100 may display a log-in page to receive an input of the authentication information to log on the SNS server 300. The authentication information may include at least one of an identification (ID), an email address, and a password.

When the image contents 810 is of a real-time broadcasting program, the contents information may include at least one of a channel name, a physical channel number, a main channel number, an auxiliary channel number, a source index, a broadcasting program name, a broadcasting start time, and a broadcasting end time.

When the image display apparatus 100 logs on the SNS server 300 and thus the image display apparatus 100 and the SNS server 300 are connected via the network, as illustrated in FIG. 9, the image display apparatus 100 may receive user information 910 of another image display apparatus interworking with the social network from the SNS server 300 and display the user information.

For example, a user of another image display apparatus, that is, a user of the second image display apparatus 102, may be a user who joins the same group, that is, a social group, as a user of one image display apparatus, that is, a user of the first image display apparatus 101, by using the SNS, and views the same image contents as the image content displayed on the first image display apparatus 101 by using the second image display apparatus 102.

The user information 910 of another image display apparatus may include at least one of an SNS account, a name, a photo, age, an area of interest, a state message, and a telephone number of a user.

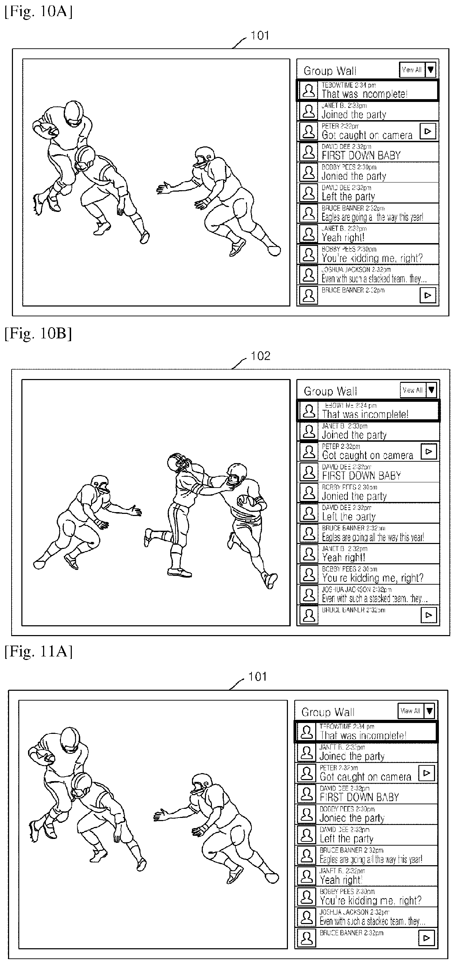

As illustrated in FIG. 10, the first and second image display apparatuses 101 and 102 may display different frames of the image contents at the same absolute time.

For example, the first image display apparatus 101 may receive and display image contents from the broadcasting station and the second image display apparatus 102 may receive and display image contents from the streaming server.

Since the image contents displayed on the second image display apparatus 102 needs an encoding time in a streaming format and a buffering time for reproduction of the image contents in the second image display apparatus 102, although the image contents displayed on the second image display apparatus 102 is the same as that received by the first image display apparatus 101, the image contents displayed on the second image display apparatus 102 may be displayed later than the image contents that are displayed on the first image display apparatus 101.

The SNS server 300 may transmit to the first server 200 a request for synchronization of image contents of the first and second image display apparatuses 101 and 102 interworking with the social network.

The image display apparatus 100 may transmit the image contents reproduction time information to the first server 200. Accordingly, the first server 200 receives the image contents reproduction time information of the first and second image display apparatuses 101 and 102 interworking with the social network (S710).

The first server 200 may set a reference time based on the received image contents reproduction time information (S720). The reference time may be set to be any one of the first reproduction time received from the first image display apparatus and the second reproduction time received from the second image display apparatus.

Also, the first server 200 may transmit the reference time to the first and second image display apparatuses 101 and 102 (S730). Accordingly, the image display apparatus 100 may receive the reference time (S630) and display the image contents based on the received reference time (S640). For example, when the reference time is later than the current image contents reproduction time, the received image contents may be displayed by being delayed for a time period corresponding to a difference between the current reproduction time and the reference time.

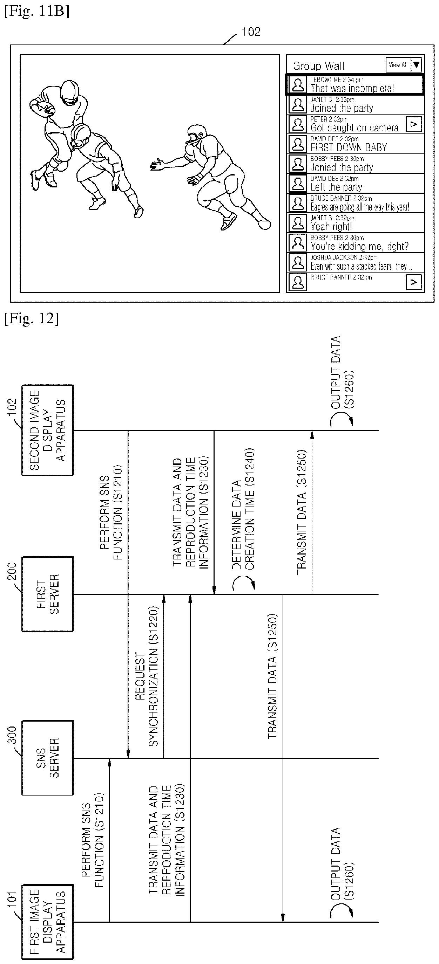

The received image contents may be temporarily stored in the memory instead of being directly output, and then displayed according to the reference time. Accordingly, as illustrated in FIG. 11, the image contents displayed on the first and second image display apparatuses 101 and 102 interworking with the social network based on the same image contents may be displayed by being synchronized with each other, and thus no time difference occurs on reproduced images of the image contents.

Thus, when the users of the first and second image display apparatuses 101 and 102 transmit or receive data related to the displayed image contents via the social network, the users may receive data of the reproduced images of the image contents displayed on the first and second image display apparatuses 101 and 102.

FIG. 12 illustrates a method of synchronizing contents in a contents-based SNS system including a plurality of image display apparatuses, the first server, and the SNS server interworking with the SNS, according to another embodiment of the present invention.

The first and second image display apparatuses 101 and 102 may receive image contents from the broadcasting station or the streaming server. The image contents may be received in form of an image signal.

The first and second image display apparatuses 101 and 102 may perform an SNS function based on the received image contents (S1210). The SNS server 300 may request from the first server 200 synchronization of the image contents of the first and second image display apparatuses 101 and 102 (S1220).

Since the operations S1210 and S1220 correspond to the operations S510 and S520 of FIG. 5, detailed descriptions thereof will be substituted by the descriptions about the operations S510 and S520 of FIG. 5.

The first and second image display apparatuses 101 and 102 may transmit the data related to the image contents and the image contents reproduction time information to the first server 200 (S1230). For example, while a first user of the first image display apparatus 101 and a second user of the second image display apparatus 102 view the same image contents, if the first user transmits first data related to the image contents to the second user, the first image display apparatus 101 may transmit the first data to the first server 200 and the first server 200 may transmit the received first data to the second image display apparatus 102.

The data related to the image contents may include image data, voice data, and text data. Also, the image contents reproduction time information related to the data may be transmitted altogether. For example, when the user of the first image display apparatus 101 transmits the first data to the second image display apparatus 102, an image contents reproduction time when the first data is input to the first image display apparatus 101 may be transmitted to the first server 200 with the first data.

Unlike the illustration of FIG. 12, the first and second image display apparatuses 101 and 102 may transmit the data and the image contents reproduction time information to the SNS server 300. The SNS server 300 may transmit the received data and image contents reproduction time information to the first server 200.

The first server 200 may determine a creation time of data based on the received image contents reproduction time information (S1240). The data and the image contents reproduction time information may be transmitted to the image display apparatuses interworking with the social network (S1250).

For example, the first data received from the first image display apparatus 101 may be transmitted to the second image display apparatus 102, whereas the second data received from the second image display apparatus 102 may be transmitted to the first image display apparatus 101.

Accordingly, when the reproduction time of the currently reproduced image contents becomes identical to the creation time of the received data, the first and second image display apparatuses 101 and 102 may output the received data (S1260). Alternatively, the first server 200 may transmit data to at least one of the image display apparatuses so that the data may be displayed by being synchronized with the image contents according to the data creation time.

For example, the first server 200 may transmit the second data to the first image display apparatus 101 when the reproduction time of the image contents reproduced by the first image display apparatus 101 becomes identical to the creation time of the second data. Then, the first image display apparatus 101 may immediately output the received second data.

Also, the first server 200 may transmit the first data to the second image display apparatus 102 when the reproduction time of the image contents reproduced by the second image display apparatus 102 becomes identical to the creation time of the first data. Then, the second image display apparatus 102 may immediately output the received first data.

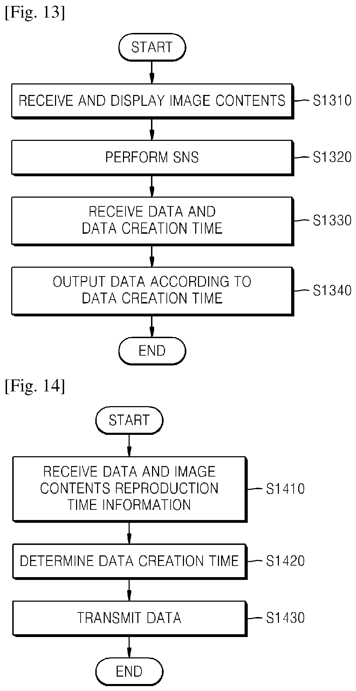

FIG. 13 is a flowchart for explaining a method of synchronizing contents in a contents-based SNS system according to another embodiment of the present invention. FIG. 14 is a flowchart for showing a method of operating a server according to another embodiment of the present invention. Referring to FIGS. 13 and 14, the image display apparatus 100 may receive and display image contents (S1310).

Also, the image display apparatus 100 may perform an SNS function based on the displayed image contents (S1320). Since the operations S1310 and S1320 correspond to the operations S610 and S620 of FIG. 6, detailed descriptions thereof will be substituted by the descriptions about the operations S610 and S620 of FIG. 6.

The image display apparatus 100 may transmit data and reproduction time information to the first server. For example, the first image display apparatus 101 may transmit first data received at a first reproduction time of the image contents to the first server 200, whereas the second image display apparatus 102 may transmit second data received at a second reproduction time of the image contents to the first server 200. The image contents reproduction time information may include information about the amount of time that passes following the beginning of the reproduction of the image contents.

Accordingly, in operation S1420, the first server 200 may determine a creation time of the data received in operation S1410. For example, when the first data is input to the first image display apparatus 101 about 10 minutes after the first image display apparatus 101 begins to reproduce the image contents, the first server 200 may determine the creation time of the first data to be about 10 minutes. Alternatively, when the second data is input to the second image display apparatus 102 about 30 minutes after the second image display apparatus 102 begins to reproduce the image contents, the first server 200 may determine the creation time of the second data to be about 30 minutes.

When receiving a data request from the image display apparatus 100, the first server 200 may transmit data (S1430). The first server 200 may transmit data creation time information together with the data. In response thereto, the image display apparatus 100 may receive the data creation time and data (S1330) and may output the data based on the received data creation time (S1340).

For example, when the second image display apparatus 102 requests data from the first server 200, the first server 200 may receive the first data received from the first image display apparatus 101 and first data creation time information.

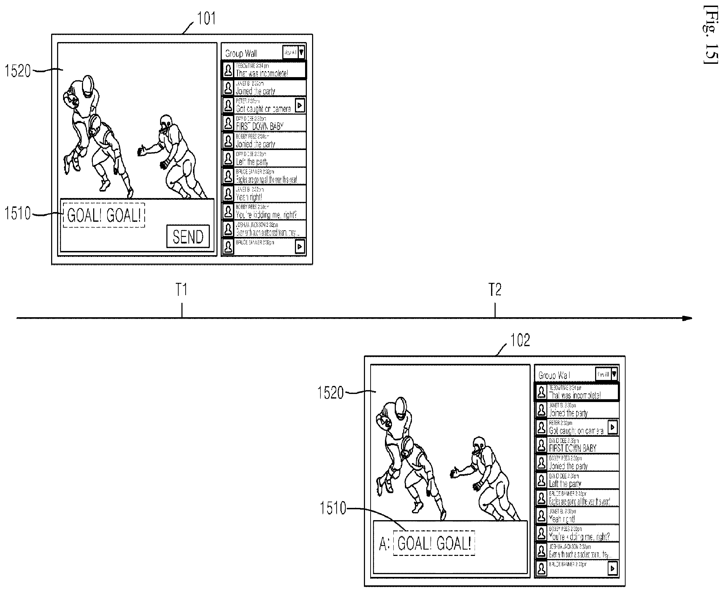

As it is illustrated in FIG. 15, first and second image display apparatuses 101 and 102 may display different frames of image contents at the same absolute time.

For example, when the image contents reproduction time of the second image display apparatus 102 is later than the image contents reproduction time of the first image display apparatus 101, a first frame 1520 displayed on the first image display apparatus 101 at a first absolute time T1 may be displayed on the second image display apparatus 102 at a second absolute time T2.

Also, the first frame 1520 may be a frame displayed about 10 minutes after reproduction of the image contents begins. When the first frame 1520 is displayed, first data 1510 to be transmitted to the second image display apparatus 102 may be input by a user. The input first data 1510 may be transmitted to the first server 200.

The first server 200 may receive the first data and determine a creation time of the first data based on the information about a reproduction time when the first data is input. For example, when the first data 1510 is displayed on the first frame 1520, a creation time of the first data may be determined to be about 10 minutes based on the information that the reproduction time of the first frame is about 10 minutes.

Accordingly, the first server 200 may transmit the first data and the first data creation time information to the second image display apparatus 102. The second image display apparatus 102 may output the first data 1510 at the same time when displaying the first frame 1520 of the image contents. Alternatively, the second image display apparatus 102 may output the first data 1510 when the image content reproduction time is about 10 minutes.

In addition, other embodiments of the present invention can also be implemented through computer readable code/instructions in/on a medium, e.g., a computer readable medium, to control at least one processing element to implement any above described embodiment. The medium can correspond to any medium/media permitting the storage and/or transmission of the computer readable code.

The computer readable code can be recorded/transferred on a medium in a variety of ways, with examples of the medium including recording media, such as magnetic storage media (e.g., ROM, floppy disks, hard disks, etc.) and optical recording media (e.g., CD-ROMs, or DVDs), and transmission media such as Internet transmission media. Thus, the medium may be such a defined and measurable structure including or carrying a signal or information, such as a device carrying a bitstream according to one or more embodiments of the present invention. The media may also be a distributed network, so that the computer readable code is stored/transferred and executed in a distributed fashion. Furthermore, the processing element could include a processor or a computer processor, and processing elements may be distributed and/or included in a single device.

As described above, according to the one or more of the above embodiments of the present invention, since the reproduced images of image contents received by different transmission methods are synchronized with each other, inconvenience due to a difference between timing of images reproduced by a plurality of image display apparatuses may be prevented. Also, since timing of a reproduced image of the image contents and SNS data according thereto are synchronized with each other, user convenience may be improved.

It should be understood that the exemplary embodiments described therein should be considered in a descriptive sense only and not for purposes of limitation. Descriptions of features or aspects within each embodiment should typically be considered as available for other similar features or aspects in other embodiments.

While one or more embodiments of the present invention have been described with reference to the figures, it will be understood by those of ordinary skill in the art that various changes in form and details may be made therein without departing from the spirit and scope of the present invention as defined by the following claims.

## Claims

1. A method of operating an image display apparatus (100a, 100b), the method comprising:
receiving image contents (S610) from a server system (20);
performing a social network service (SNS) between a plurality of image display apparatuses (101, 102) and the server system (S620) for allowing the transmitting or receiving of SNS data related to the image contents from the plurality of display apparatuses interworking with the SNS;
receiving a reference time (S630) from the server system that is set according to information corresponding to an image contents reproduction time of the plurality of image display apparatuses interworking with the SNS, wherein each image display apparatus has its own reproduction time; and
displaying the image contents according to the reference time (S640), wherein the image contents are displayed at the same time in each of the plurality of image display apparatuses interworking with the SNS;
**characterized by**:
setting the reference time to be an image contents reproduction time of one from among the plurality of image display apparatuses (101, 102) interworking with the SNS which has the latest image contents reproduction time among the plurality of image display apparatuses.

2. The method of claim 1, wherein the image contents comprise broadcasting contents and streaming contents that are a retransmission of the broadcasting contents.

3. The method of claim 1, wherein, in the displaying of the image contents (S640), the image contents are displayed by synchronizing the image contents reproduction time with the reference time.

4. The method of claim 1, wherein the performing of the SNS function (S620) comprises forming a social group with at least one other image display apparatus.

5. An image display apparatus (100a, 100b) comprising:
a display unit (120) configured to display received image contents from a server system (20);
a controller (140) configured to control an operation of a social network service (SNS) between a plurality of image display apparatuses (101, 102) and the server system, wherein the SNS is configured to allow the transmitting or receiving of SNS data related to the image contents from the plurality of image display apparatuses interworking with the SNS; and
a network interface unit (170) configured to receive a reference time from the server system that is set according to information corresponding to an image contents reproduction time of the plurality of image display apparatuses interworking with the SNS, wherein each image display apparatus has its own reproduction time,
wherein the controller is configured to control a displaying of the image contents according to the reference time and control the displaying of the received image contents at the same time in each of the plurality of image display apparatuses interworking with the SNS;
**characterized in that**:
the reference time is set to be an image contents reproduction time of one from among the plurality of image display apparatuses (101, 102) interworking with the SNS which has the latest image contents reproduction time among the plurality of image display apparatuses.

6. The image display apparatus (100a, 100b) of claim 5, wherein the image contents comprise broadcasting contents and streaming contents that are a retransmission of the broadcasting contents.

7. The image display apparatus (100a, 100b) of claim 5, wherein the controller (140) is configured to control the displaying of the received image contents by synchronizing the image contents reproduction time with the reference time.

## Patentansprüche

1. Verfahren zum Betreiben einer Bildanzeigevorrichtung (100a, 100b), das Verfahren umfassend:
Empfangen von Bildinhalten (S610) von einem Serversystem (20);
Durchführen eines sozialen Netzwerkdienstes (Social Network Service, SNS) zwischen einer Vielzahl von Bildanzeigevorrichtungen (101, 102) und dem Serversystem (S620) zum Ermöglichen des Sendens oder Empfangens von SNS-Daten im Zusammenhang mit den Bildinhalten von der Vielzahl von Anzeigevorrichtungen, die mit dem SNS zusammenwirken;
Empfangen einer Referenzzeit (S630) von dem Serversystem, die gemäß Informationen eingestellt wird, die einer Bildinhaltswiedergabezeit der Vielzahl von Bildanzeigevorrichtungen entsprechen, die mit dem SNS zusammenwirken, wobei jede Bildanzeigevorrichtung ihre eigene Wiedergabezeit aufweist; und
Anzeigen der Bildinhalte gemäß der Referenzzeit (S640), wobei die Bildinhalte gleichzeitig in jeder der Vielzahl von Bildanzeigevorrichtungen angezeigt werden, die mit dem SNS zusammenwirken;
**gekennzeichnet durch**:
Einstellen der Referenzzeit als eine Bildinhaltswiedergabezeit von einer aus der Vielzahl von mit dem SNS zusammenwirkenden Bildanzeigevorrichtungen (101, 102), welche die aktuellste Bildinhaltswiedergabezeit aus der Vielzahl von Bildanzeigevorrichtungen aufweist.

2. Verfahren nach Anspruch 1, wobei die Bildinhalte Rundfunkinhalte und Streaming-Inhalte umfassen, die eine erneute Übertragung der Rundfunkinhalte sind.

3. Verfahren nach Anspruch 1, wobei bei dem Anzeigen der Bildinhalte (S640) die Bildinhalte durch Synchronisieren der Bildinhaltswiedergabezeit mit der Referenzzeit angezeigt werden.

4. Verfahren nach Anspruch 1, wobei das Durchführen der SNS-Funktion (S620) das Bilden einer sozialen Gruppe mit mindestens einer anderen Bildanzeigevorrichtung umfasst.

5. Bildanzeigevorrichtung (100a, 100b), umfassend:
eine Anzeigeeinheit (120), die konfiguriert ist, um von einem Serversystem (20) empfangene Bildinhalte anzuzeigen;
eine Steuerung (140), die konfiguriert ist, um einen Betrieb eines sozialen Netzwerkdienstes (SNS) zwischen einer Vielzahl von Bildanzeigevorrichtungen (101, 102) und dem Serversystem zu steuern, wobei der SNS konfiguriert ist, um das Senden oder Empfangen von SNS-Daten im Zusammenhang mit den Bildinhalten der Vielzahl von Bildanzeigevorrichtungen, die mit dem SNS zusammenwirken, zu ermöglichen; und
eine Netzwerkschnittstelleneinheit (170), die konfiguriert ist, um eine Referenzzeit von dem Serversystem zu empfangen, die gemäß Informationen eingestellt ist, die einer Bildinhaltswiedergabezeit der Vielzahl von Bildanzeigevorrichtungen entsprechen, die mit dem SNS zusammenwirken, wobei jede Bildanzeigevorrichtung ihre eigene Wiedergabezeit aufweist,
wobei die Steuerung konfiguriert ist, um ein Anzeigen der Bildinhalte gemäß der Referenzzeit zu steuern und das gleichzeitige Anzeigen der empfangenen Bildinhalte in jeder der Vielzahl von Bildanzeigevorrichtungen zu steuern, die mit dem SNS zusammenwirken;
**dadurch gekennzeichnet, dass**:
die Referenzzeit als eine Bildinhaltswiedergabezeit von einer aus der Vielzahl von mit dem SNS zusammenwirkenden Bildanzeigevorrichtungen (101, 102) eingestellt ist, welche die aktuellste Bildinhaltswiedergabezeit aus der Vielzahl von Bildanzeigevorrichtungen aufweist.

6. Bildanzeigevorrichtung (100a, 100b) nach Anspruch 5, wobei die Bildinhalte Rundfunkinhalte und Streaming-Inhalte umfassen, die eine erneute Übertragung der Rundfunkinhalte sind.

7. Bildanzeigevorrichtung (100a, 100b) nach Anspruch 5, wobei die Steuerung (140) konfiguriert ist, um das Anzeigen der empfangenen Bildinhalte durch Synchronisieren der Bildinhaltswiedergabezeit mit der Referenzzeit zu steuern.

## Revendications

1. Procédé d'exploitation d'un appareil d'affichage d'images (100a, 100b), le procédé comprenant :
la réception des contenus d'image (S610) à partir d'un système serveur (20) ;
la réalisation d'un service de réseau social (SNS - social network service) entre une pluralité d'appareils d'affichage d'images (101, 102) et le système serveur (S620) pour permettre la transmission ou la réception de données SNS liées aux contenus d'image provenant de la pluralité des appareils d'affichage fonctionnant en liaison avec le SNS ;
la réception d'une heure de référence (S630) du système serveur qui est établie en fonction d'informations correspondant à une heure de reproduction des contenus d'image de la pluralité des appareils d'affichage d'images fonctionnant en liaison avec le SNS, dans lequel chaque appareil d'affichage d'images a sa propre heure de reproduction ; et
l'affichage des contenus d'image en fonction de l'heure de référence (S640), dans lequel les contenus d'image sont affichés en même temps dans chacun de la pluralité des appareils d'affichage d'images fonctionnant en liaison avec le SNS ;
**caractérisé par** :
l'établissement de l'heure de référence comme étant une heure de reproduction de contenus d'images parmi la pluralité des appareils d'affichage d'images (101, 102) fonctionnant en liaison avec le SNS ayant la dernière heure de reproduction de contenus d'images parmi la pluralité des appareils d'affichage d'images.

2. Procédé selon la revendication 1, dans lequel les contenus d'image comprennent des contenus de diffusion et des contenus de transmission en continu qui sont une retransmission des contenus de diffusion.

3. Procédé selon la revendication 1, dans lequel, lors de l'affichage des contenus d'image (S640), les contenus d'image sont affichés en synchronisant l'heure de reproduction des contenus d'image avec l'heure de référence.

4. Procédé selon la revendication 1, dans lequel l'exécution de la fonction SNS (S620) comprend la formation d'un groupe social avec au moins un autre appareil d'affichage d'images.

5. Appareil d'affichage d'images (100a, 100b) comprenant :
une unité d'affichage (120) configurée pour afficher les contenus d'image reçus d'un système serveur (20) ;
un dispositif de commande (140) configuré pour commander une opération d'un service de réseau social (SNS) entre une pluralité d'appareils d'affichage d'images (101, 102) et le système serveur, dans lequel le SNS est configuré pour permettre la transmission ou la réception de données SNS liées aux contenus d'image provenant de la pluralité des appareils d'affichage d'images fonctionnant en liaison avec le SNS ; et
une unité d'interface de réseau (170) configurée pour recevoir une heure de référence du système serveur qui est définie en fonction d'informations correspondant à une heure de reproduction de contenus d'images de la pluralité des appareils d'affichage d'images fonctionnant en liaison avec le SNS, dans lequel chaque appareil d'affichage d'images a sa propre heure de reproduction,
dans lequel le dispositif de commande est configuré pour commander un affichage des contenus d'image en fonction de l'heure de référence et pour commander l'affichage des contenus d'image reçues au même moment dans chacun de la pluralité des appareils d'affichage d'image fonctionnant en liaison avec le SNS ;
**caractérisé en ce que** :
l'heure de référence est établie comme étant une heure de reproduction de contenus d'images parmi la pluralité des appareils d'affichage d'images (101, 102) fonctionnant en liaison avec le SNS ayant la dernière heure de reproduction de contenus d'images parmi la pluralité des appareils d'affichage d'images.

6. Appareil d'affichage d'images (100a, 100b) selon la revendication 5, dans lequel les contenus d'image comprennent des contenus de diffusion et des contenus de transmission en continu qui sont une retransmission des contenus de diffusion.

7. Appareil d'affichage d'images (100a, 100b) selon la revendication 5, dans lequel le dispositif de commande (140) est configuré pour commander l'affichage des contenus d'image reçus en synchronisant l'heure de reproduction des contenus d'image avec l'heure de référence.
